# EUROPEAN PATENT SPECIFICATION

(11) **EP 1 418 043 B1**
(45) Date of publication and mention of the grant of the patent: **10.10.2007**
(21) Application number: 03104041.3
(22) Date of filing: 31.10.2003
(51) Int. Cl.: B29D 30/48, B29C 47/00

(54) **A method and apparatus for forming an annular elastomeric tire component**
Verfahren und Vorrichtung zur Herstellung eines ringförmigen Gummibestandteiles für Luftreifen
Procédé et dispositif pour la fabrication d'un élément annulaire en caoutchouc pour pneumatiques

(30) Priority: 08.11.2002 US 291279
(43) Date of publication of application: 12.05.2004
(73) Proprietor: THE GOODYEAR TIRE & RUBBER COMPANY, Akron, Ohio 44316-0001 (US)
(72) Inventor: VARGO, Richard David, 44223, Cuyahoga Falls / Ohio (US); BURG, Gary Robert, 44646, Massillon / Ohio (US); KOCH, Brian Richard, 44632, Hartville / Ohio (US); SIEVERDING, Mark Anthony, 44685, Uniontown / Ohio (US)
(74) Representative: Kutsch, Bernd

(56) References cited:
- EP-A- 0 970 797
- DE-A1- 2 803 460
- GB-A- 1 590 378
- US-A- 4 963 207
- US-A- 5 297 949
- US-A- 5 336 349
- US-A1- 2002 005 243
- PATENT ABSTRACTS OF JAPAN vol. 2002, no. 11, 6 November 2002 (2002-11-06) -& JP 2002 187218 A (YOKOHAMA RUBBER CO LTD:THE), 2 July 2002 (2002-07-02)
- PATENT ABSTRACTS OF JAPAN vol. 1999, no. 09, 30 July 1999 (1999-07-30) & JP 11 105155 A (BRIDGESTONE CORP), 20 April 1999 (1999-04-20)

## Description

### Technical Field

This invention relates to a method and an apparatus for forming profiled annular elastomeric tire components.

### Background of the Invention

In the manufacture of tire components elastomeric strips of rubber are prepared typically by extruding the parts into long continuous strips which are cut to length and lapped or butt spliced onto a cylindrically shaped building drum.

The tire building drum is then expanded radially in the center and the ends are drawn in axially to shape the tire into a toroidial form. Belts of cord-reinforced layers and a strip of tread rubber are applied over the crown of the green carcass to form a "green" or unvulcanized tire assembly.

The finished tire assembly is then placed into a tire mold and cured in a process called vulcanization to make a tire.

Since the tire components are assembled flat on a cylindrical tire building drum and then expanded to a toroidial shape, each component has to be placed in tension or compression prior to being molded. This stretching of the various parts causes slippage between the various rubber parts as the components heat up during vulcanization.

Attempts to minimize the slippage of the various parts have been made. One area of particular concern is the bead apex. The bead apex is a rubber component that lies directly above an annular tensile member commonly referred to as a bead core. The shape of the bead apex is generally an elongated triangular shape. The tire's carcass plies lie adjacent the radially inner surface of the bead apex and generally wrap around the bead core and extend along the axially outer surface of the bead apex in what is commonly referred to as the ply turnup.

When the tire is built flat the apex must be turned 90° to an upright position. This forces the radially outermost tip of the bead apex to stretch circumferentially a large amount resulting in high stresses and localized thinning of the bead apex.

In US-A- 6,298,893 to Vannan precured bead apexes are manufactured so that the ply path of the carcass plies can be more reliably controlled. As Vannan notes the tensioning of the ply cords and their location relative to the natural ply path of the tire are mostly controlled by the bead apex. Vannan's solution was to preassemble and precure the bead core and the bead apex. While this approach improves the stability of the bead apex it has the major drawback of lacking the adhesion properties found when green or uncured components are assembled.

Attempts have been made to make uncured strips of bead apexes but the elongated tip of these apexes when formed into an annular ring tend to warp and buckle as the extrudate shrinks and reduces tension and cools. This warping or buckling renders such parts useless. Accordingly, only very short squatty apexes lend themselves to this type of preforming.

GB-A- 159 0378 discloses a method of forming an annular elastomeric tire component comprising the steps of extruding a first strip of elastomeric material annularly onto a surface, and shaping the first strip of elastomeric material to a predetermined profile by compressing the first strip of material between a shaping die and the surface. JP-A- 2002-187218 describes a method and an apparatus according to the preamble of claim 1 and 12 respectively.

It is one object of the present invention to provide a method and apparatus that can form an annular elastomeric strip such as an apex component without an unwanted stretching or warping of the tip.

It is a further object of the invention to provide a method and apparatus for making an elongated apex or other strip of tire material in a profile oriented very close to the shape of the finished molded tire.

It is yet a further object to provide a method for manufacturing multilayered components of different materials or multilayered components of similar material.

It is yet another object to provide a method that creates a smooth overlap of the beginning of an annular component and an end of the component such that the part appears seamless.

### Summary of the Invention

A method of forming an annular elastomeric tire component according to claim 1 is disclosed. Furthermore, an apparatus for forming an annular elastomeric tire component according to claim 12 is disclosed.

The predetermined profile may have non-parallel opposing surfaces or non-linear parallel surfaces. Preferably each formed strip has a radially inner end that is centered about the axis of rotation of the formed strip.

The method may include rotating the strip of elastomeric material about an axis of rotation as the strip is applied onto the support surface thereby forming the strip annularly. Alternatively, the support surface can be rotated about an axis of rotation as the strip is applied to form the strip annularly following the contour of the support surface, the forming die being spaced to achieve the proper component dimension.

The strip, when applied to the support surface is formed having a first end and upon about 360° revolution a terminal end can be formed by stopping the flow of extrudate. The terminal end can be and preferably is overlying the first end as a result of the relative movement of the material and the shaping die thereby forming an overlapping joint that appears seamless. The uniformity of the strip cross-sectional profile is preferably maintained by the shaping die and the support surface and extrusion/injection rate.

The method may also include the step of applying additional strips of elastomeric material by annularly overlapping at least a portion of the at least one first strip or another previously applied strip. In this manner a subassembly of uncured tire components can be laminated together.

These additional strips of elastomeric material can then be shaped to predetermined cross sectional profiles by compressing the additional strips of material between a shaping die and the overlapped previously formed strip and the support surface. In one embodiment almost all of an entire green tire is assembled using this method.

This method is used to make elongated bead apexes of uncured elastomeric material. An annular bead core is placed on the support surface and retained such that the axis of rotation is coincident to the axis of rotation of the support surface or the circular path of the extruder. The bead then acts as a material flow stop at the radially inner end. As the extruded strip is placed annularly onto a support surface adjacent the bead core, the shaping die simultaneously compresses the strip of material to a predetermined profile to join the strip to the bead core forming a bead core and uncured apex subassembly.

The above method is performed by an apparatus having an extruder means for forming the elastomeric strip, a support surface, the support surface having a radially inner support rim, a means for rotating the extruder means about the axis of the support rim or alternatively a means for rotating the support surface about the axis of the support rim. The means for rotating creates a relative motion between the extruder means and the support surface thereby enabling the strip to be formed annularly. In close proximity to the outlet end or discharge end of the extruder means is a shaping die. The shaping die in combination with the support surface forms a cavity through which the elastomeric strip is compressed imparting the desired profile or shape of the finished part. The die is designed to be oriented at a low angle of attack at about 30° or less relative to the support surface. Preferably, the leading portion of shaping die channels the strip of material to the end of the shaping die which imparts the parts profile. The die can achieve a completed profile in a rotation of just over 360° for parts. In the manufacture of bead apex subassemblies the radially inner rim is adapted to fit inside the bead core diameter thereby providing support for the bead core. To change bead diameters concentric ring spacers or an adjustable ring mechanism can be attached to the support rim quickly and efficiently.

The support surface can be flat and perpendicular to the axis of rotation or flat and conical, while the shaping die can be of any desired profile or contour. Alternatively, both the support surface and the shaping die can be contoured if so desired. As used herein many of the formed parts are considered oriented substantially perpendicular to the axis of rotation. Several of the formed parts have only portions formed substantially perpendicularly. It is understood that conical and contoured surfaces are not truly perpendicular to the axis; however, if one bisects the formed part along a straight line through the formed part in a portion that when placed in a tire for assembly lies below the tire's crown in the sidewall regions of the tire, the angle relative to the axis is preferably oriented at an angle greater than 45°, generally closer to 90°, relative to the axis of rotation.

This feature greatly reduces the tensioning of parts when compared to parts that were formed horizontal to the axis of rotation and then turned to a more vertical orientation as is common or conventional with tire building drums.

In practice, it is desirable to transfer the formed parts directly to a tire building station without separate storage and handling. In such a case the formed bead apex subassembly can be removed from the support surface and transferred directly to the tire building machine. Most preferably the method can be configured such that the support surface is a toroidially shaped building drum or core. In this method the formed strips are applied directly to the toroidially shaped carcass structure. Using that method liners, sidewalls, chafers, gum strips, ply coats, apexes and other elastomeric strips can be formed.

### Definitions

"Axial" and "axially" means lines or directions that are parallel to the axis of rotation of the tire;

"Bead" means that part of the tire comprising an annular tensile member with or without other reinforcement elements such as flippers, chippers, apexes, toe guards and chafers, to fit the rim;

"Belt reinforcing structure" means at least two layers of plies of parallel cords, woven or unwoven, underlying the tread, unanchored to the bead, and having both left and right cord angles in the range from 17 degrees to 27 degrees with respect to the equatorial plane of the tire;

"Carcass" means the tire structure apart from the belt structure, tread, under tread, and sidewall rubber over the plies, but including the beads;

"Circumferential" means lines or directions extending along the perimeter of the surface of the annular tread perpendicular to the axial direction;

"Chafers" refers to narrow strips of material placed around the outside of the bead to protect cord plies from the rim, distribute flexing above the rim, and to seal the tire;

"Chippers" means a reinforcement structure located in the bead portion of the tire;

"Cord" means one of the reinforcement strands of which the plies in the tire are comprised;

"Innerliner" means the layer or layers of elastomer or other material that form the inside surface of a tubeless tire and that contain the inflating fluid within the tire;

"Ply" means a continuous layer of rubber-coated parallel cords;

"Radial" and "radially" means directions radially toward or away from the axis of rotation of the tire;

### Brief Description of the Drawings

The invention will be described by way of example and with reference to the accompanying drawings in which:
Figure 1 is a cross sectional view of a bead apex assembly of the present invention.
Figure 2 is a cross-sectional view of a multilayer tire component of the present invention.
Figure 3 is a perspective view of an apparatus of the present invention.
Figure 4 is an enlarged view of a shaping die and extruder head applying an elastomeric strip onto a support surface of the present invention.
Figure 4A is a view similar to Figure 4 showing a spiral layered formed strip.
Figure 5 is a cross-sectional view of the apparatus of Figure 4.
Figures 6 through 13 depict an embodiment of the invention wherein formed strips are applied directly onto a toroidially shaped building core or bladder to create a complete tire component.

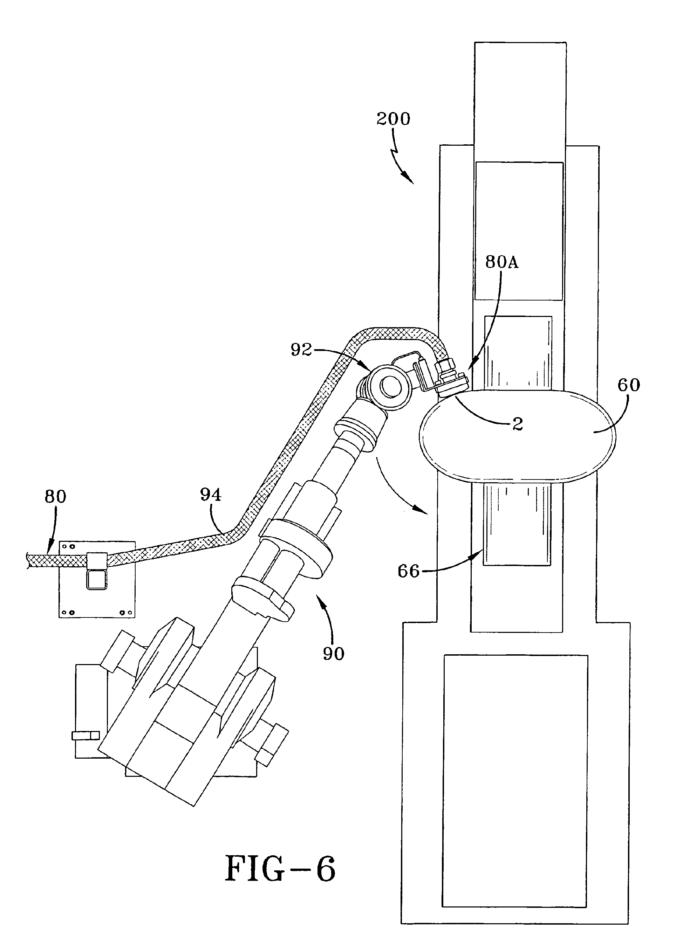

Figure 6 shows a tire building drum and a robotic controlled extruder head and forming die connected to a robotic device.

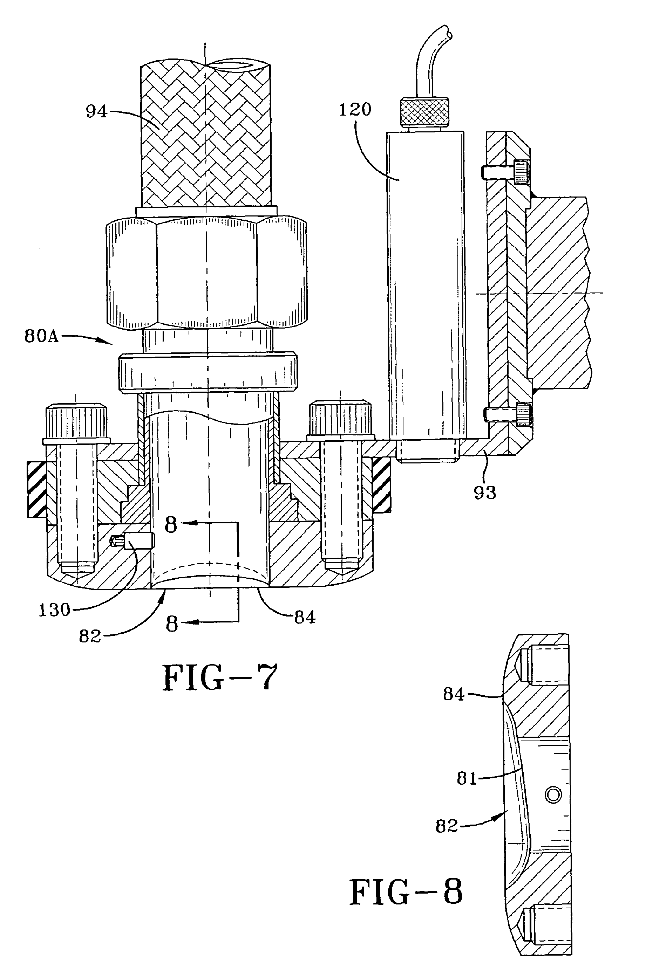

Figure 7 is an enlarged view of the extruder head and die assembly.
Figure 8 is a cross-sectional view of the forming die assembly.

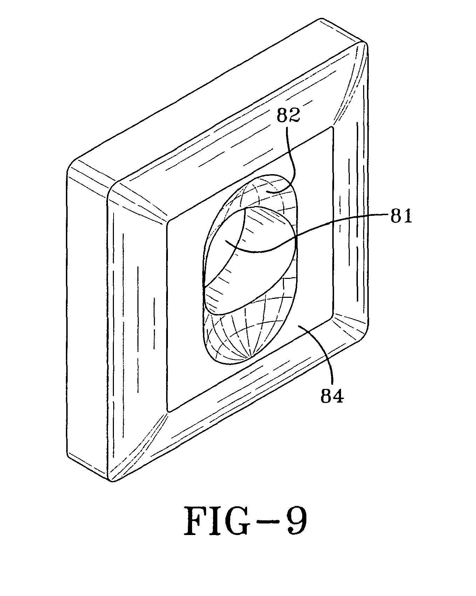

Figure 9 is an enlarged perspective view of the forming die assembly.

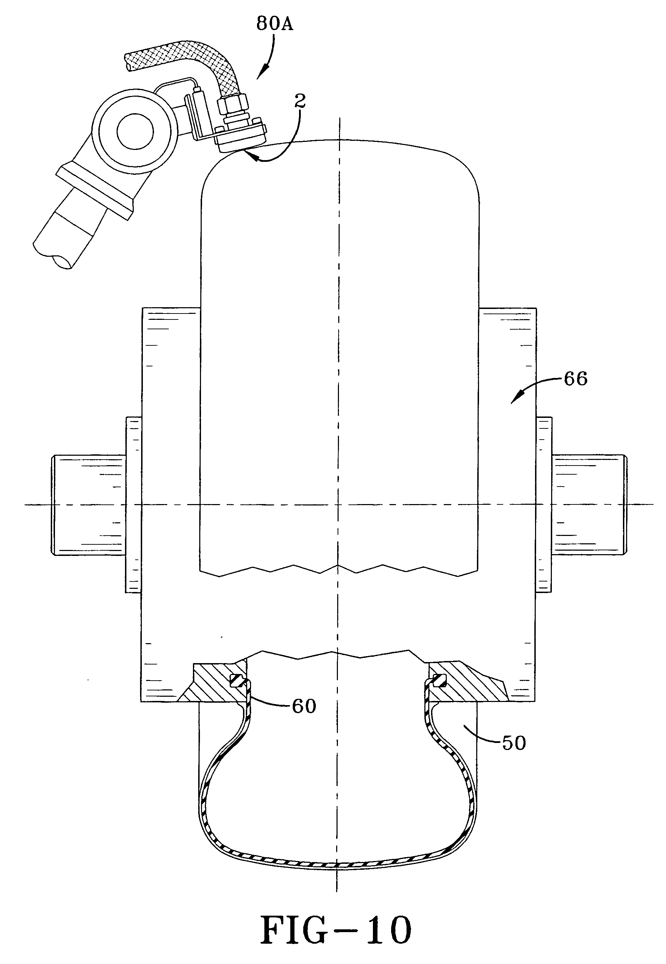

Figure 10 shows the robotic controlled extruder head and forming die abutted to permit applying a complete innerliner.

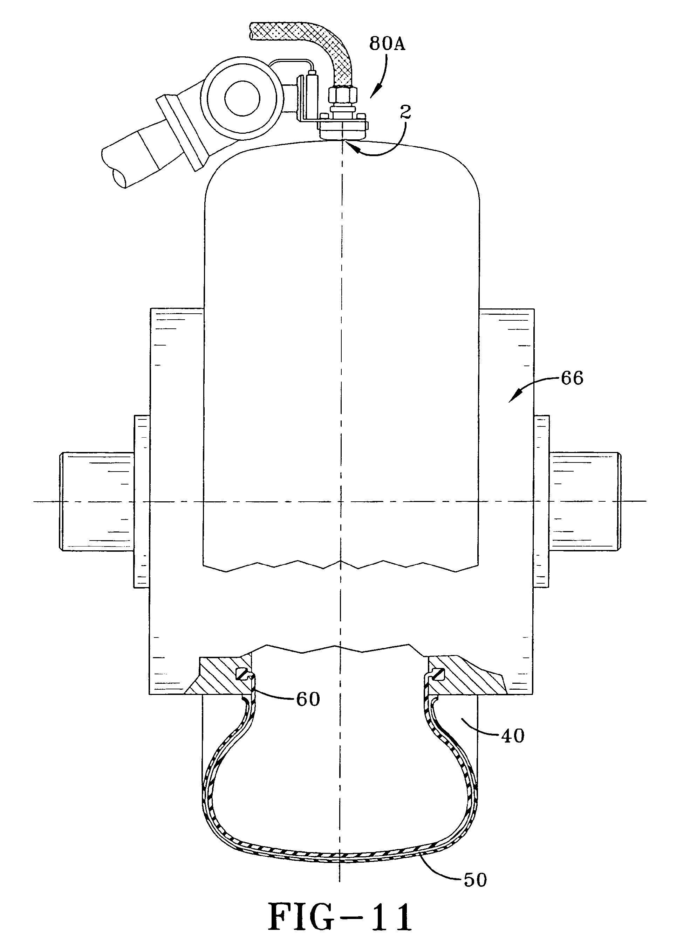

Figure 11 shows the robotic extruder head and forming die applying a ply coat layer.

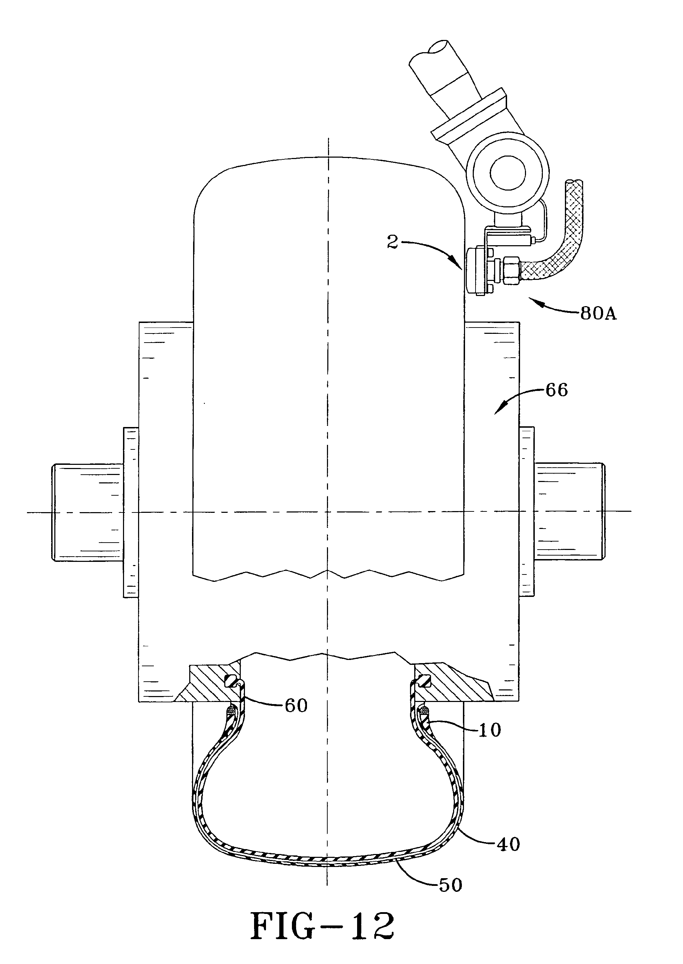

Figure 12 shows the robotic controlled extruder heads and forming dies applying a pair of apexes.

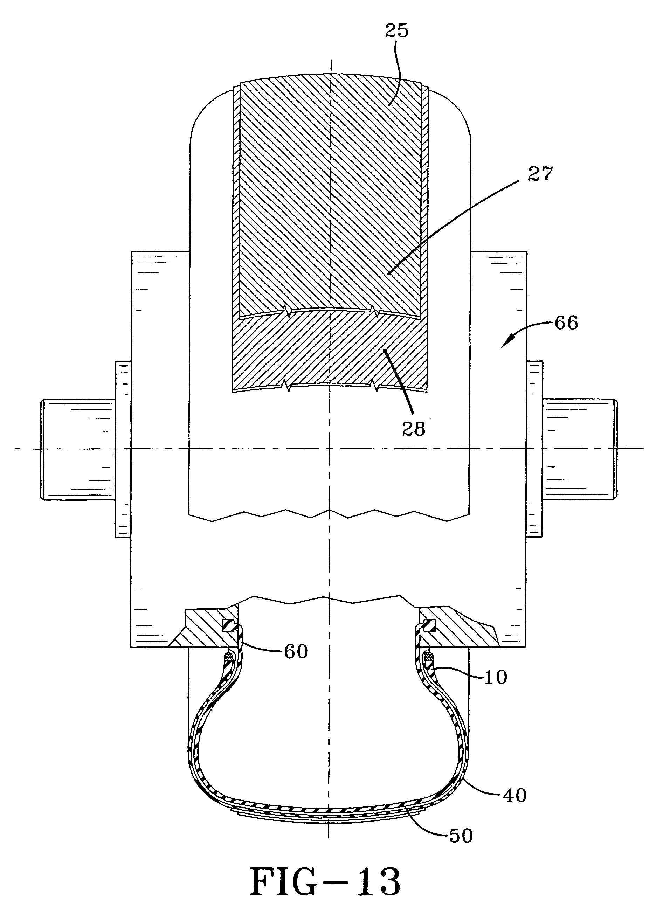

Figure 13 shows the carcass having belt layers applied.

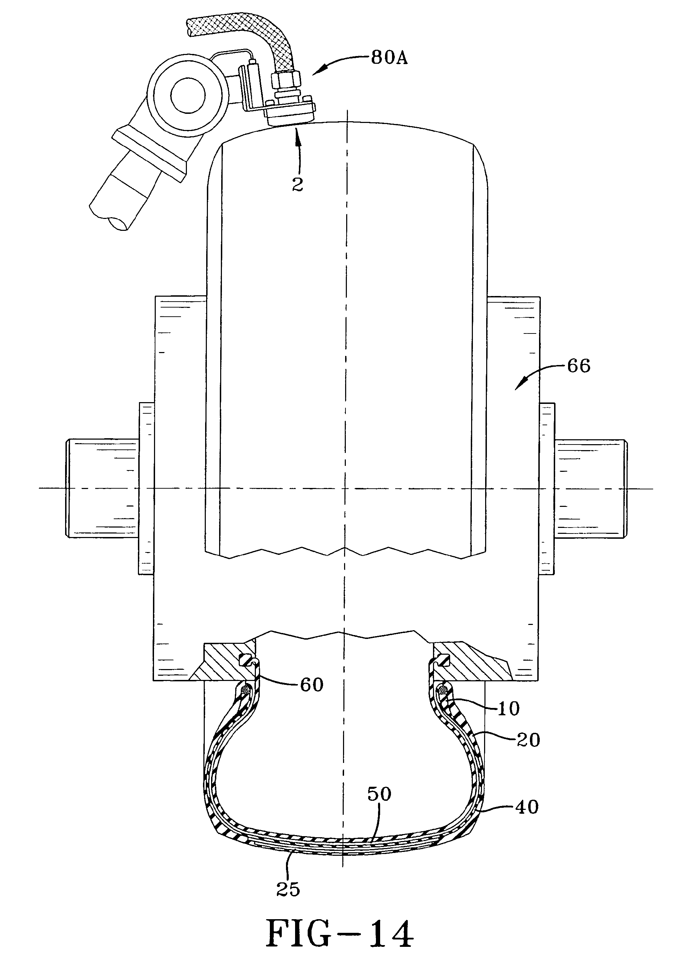

Figure 14 shows a robotic controlled extruder head and forming die applying a side wall and a crown cushion layer.

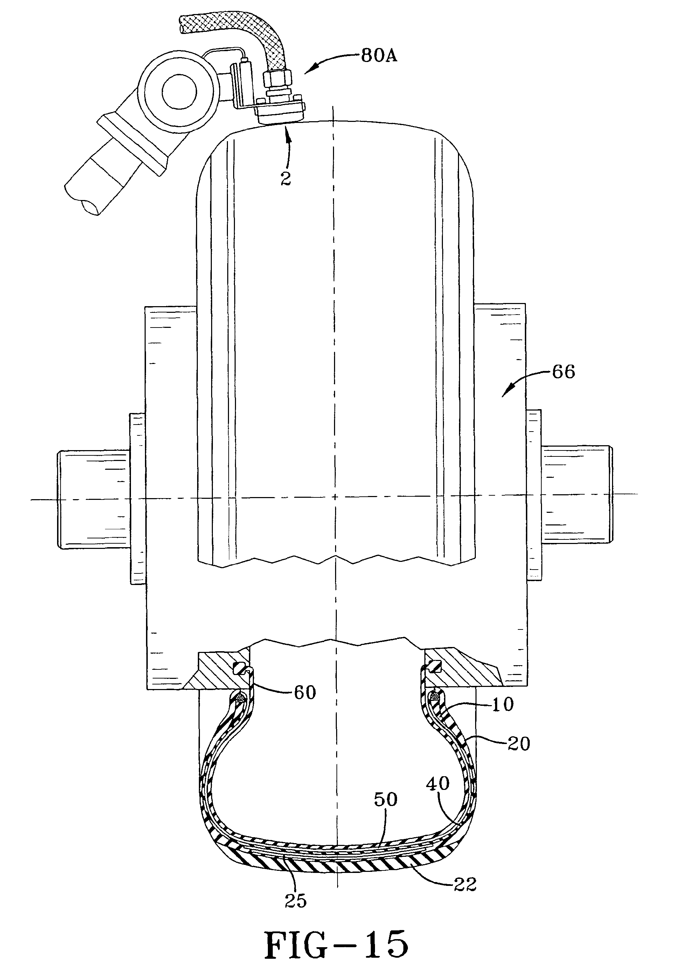

Figure 15 shows a robotic controlled extruder head and forming die applying a tread to the carcass belt assembly.

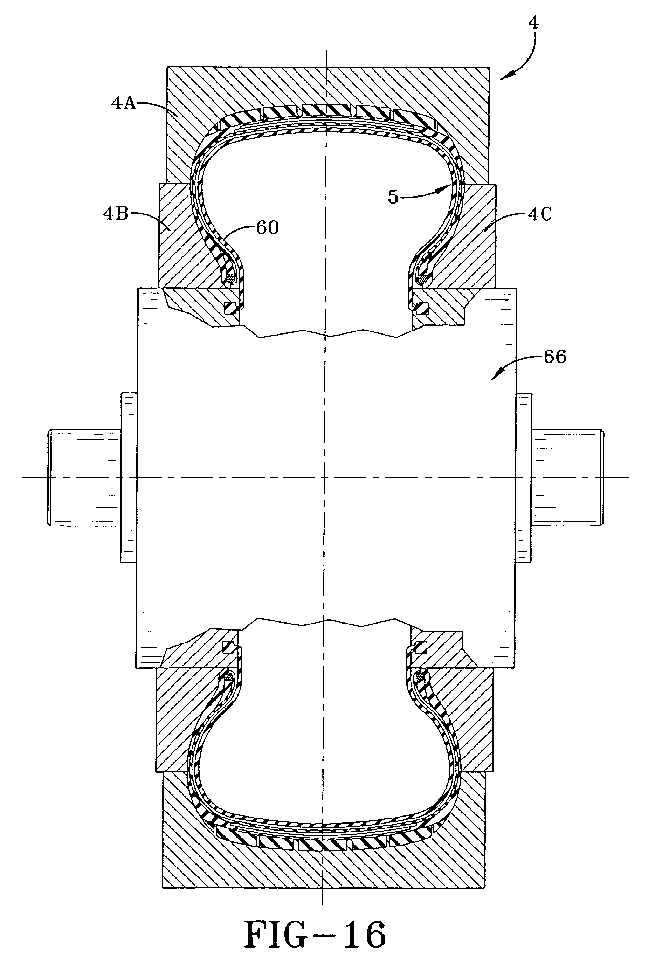

Figure 16 shows a tire curing mold for molding the tire.

### Detailed Description of the Invention

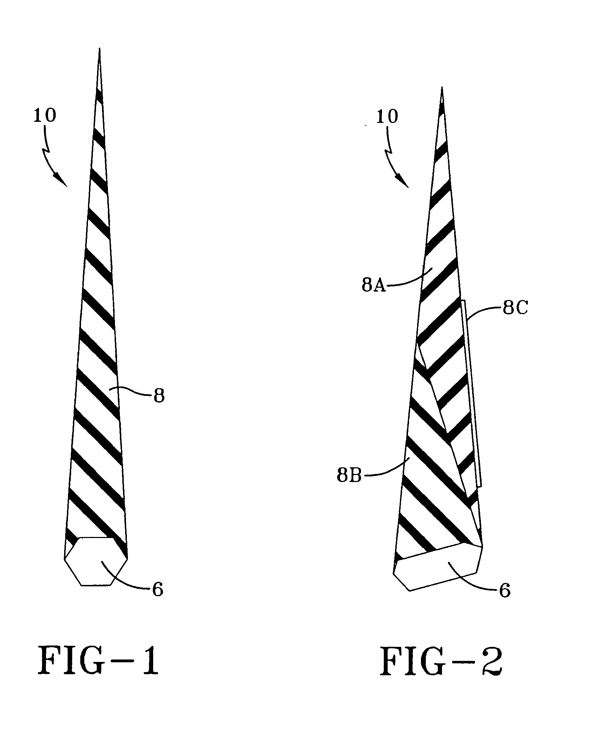

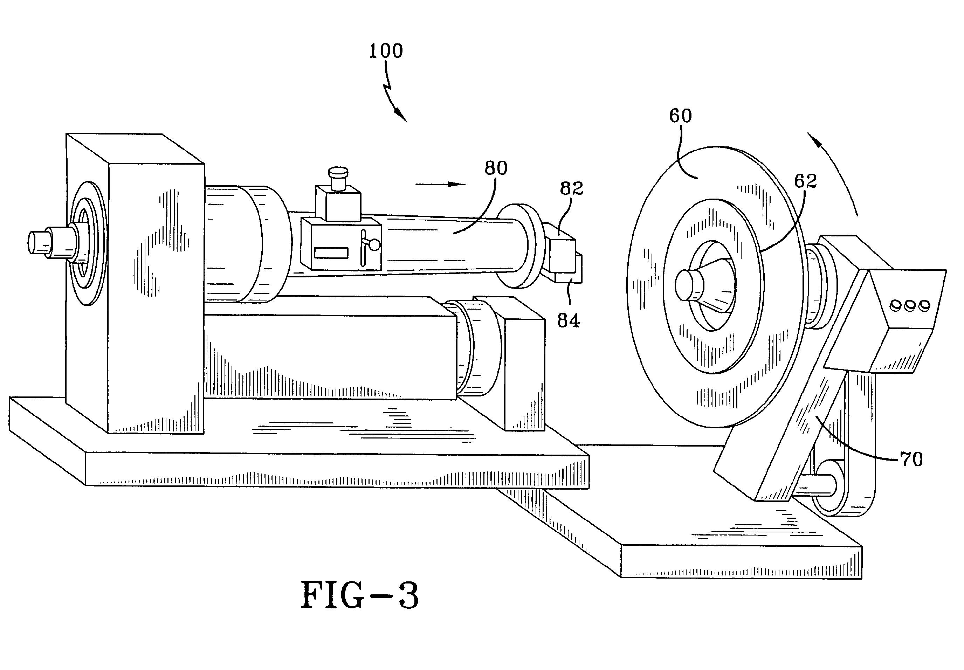

With reference to Figures 1 and 2, an exemplary tire component is shown. The tire component as illustrated is a bead apex 10 made of elastomeric material or a rubber compound 8 and radially inward of the bead apex 10 is an annular tensile member commonly referred to as a bead core 6. In Figure 2 the bead apex 10 is shown as a multilayered elastomeric component formed by at least two distinct rubber compounds 8A, 8B, and 8C. Such multilayered apex components are used in the manufacture of commercial truck tires, for example.

These components actually space the carcass ply cords from the ply turnup and tend to help structurally stiffen the tire structure. The use of the bead apex 10 can actually reduce the amount of stresses and strains in the tire during use. Ideally the apex is formed with an elongated triangular cross-sectional shape.

In conventional tire building such components such as the bead apex and rubber sidewalls are formed as an extruded strip of generally a flat cross section. The components are spliced on a tire building drum and have their axis of rotation parallel to the axis of the tire building drum. The assembled components are then folded over in a procedure of tire building commonly known as the ply turnup step. These uncured parts are then stitched to a carcass assembly. This procedure rolls these parts 180° wherein the axially outer ends are turned axially inwardly. After that a tire building bladder expands in a doughnut or toroidial shape as the bead portions of the carcass are held in a clamped position. The beads are allowed to move axially inwardly thereby allowing the carcass to be shaped torroidally by the expanded bladder. The components such as the apex and the sidewalls are then forced to an almost vertical or radially outwardly extending orientation wherein the components' axis of rotation is shifted from parallel to the axis of the building drum to almost perpendicular. The actual shaping of these green or uncured rubber parts creates residual stress that during the tire vulcanization process caused the various components to slip as they soften during curing. This slipping relaxes the built-in strains and stresses but also means the location of and tension of the ply and belt cords in the finished product is much less predictable giving rise to tire non-uniformity.

Ideally, to make a uniform tire the components should be built with no built-in internal stress. Reduction in such stresses is therefore a desirable design goal.

These thin elongated parts of uncured rubber strips are generally produced off line relative to the tire building station. This off-line extruding means the parts must be sufficiently durable to survive material handling.

In the case of bead apexes this means the thin radially outer tip portion must be terminated. The thin end is too susceptible to damage and premature stretching and puckering. When puckering occurs the components cannot be stitched without wrinkles.

Attempts to solve these problems have led many designers to try precuring the bead apex assembly. In this way the molded bead apex becomes much more durable; however, precured components are much harder to stick to the other uncured tire components. Accordingly, the slippage problem between the cured and uncured parts during vulcanization becomes exaggerated creating another form of tire uniformity issues.

The present invention provides a novel way to form elastomeric tire components quickly and efficiently. The method permits the components to be made annularly in an uncured state and the axis of the annular components can be non-parallel to the circumferential length of the part. In fact, the parts can be made at any desired angle relative to the axis. In cases where the finished product is oriented at 45° or more relative to the tire's axis the part can be formed to that desired finished product angle. The method allows angles substantially perpendicular to the tire's axis to be easily achieved which means the components can be formed very close to the as-molded shape and orientation.

Such component fabrication is easily adapted to be coupled to the tire building equipment thus avoiding storage problems. This enables parts with very thin flimsy tips to be utilized without the fear of material handling problems.

Alternatively, the parts can be made and stored for later use, recognizing the associated issues of handling and aging of rubber parts.

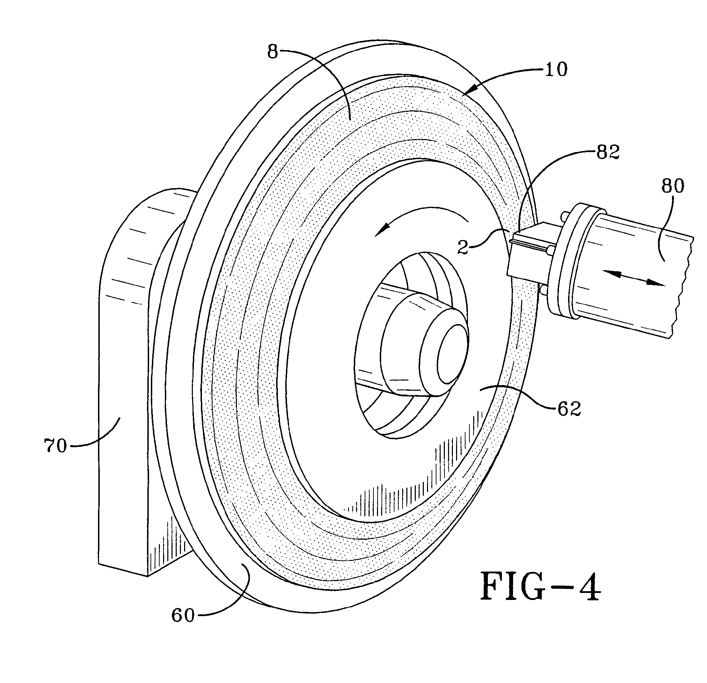

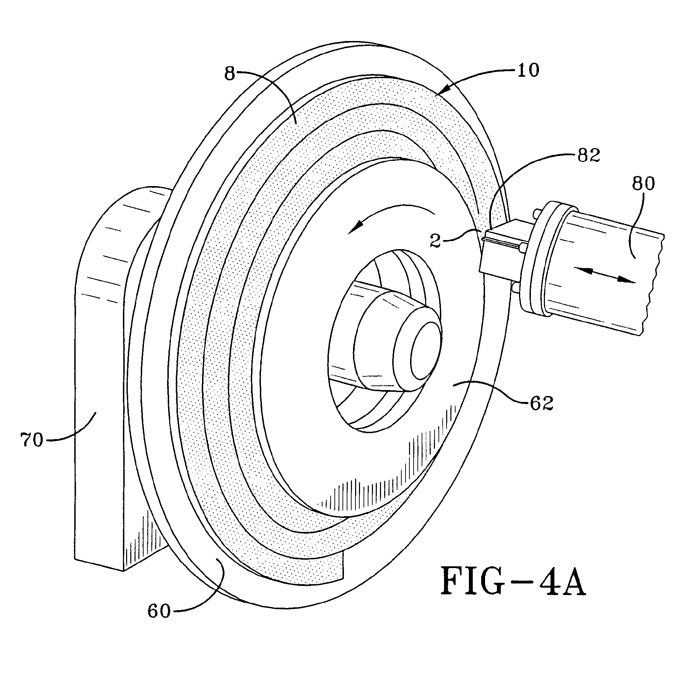

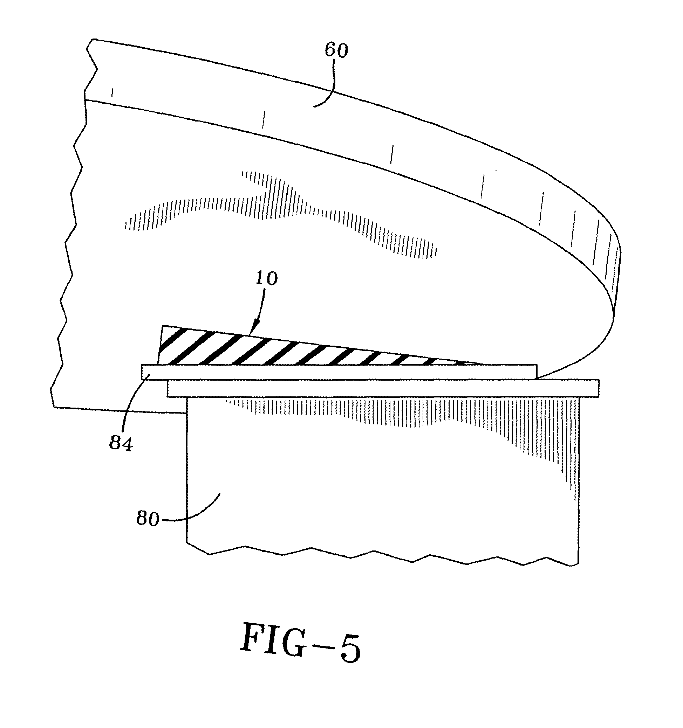

The method to achieve this type of part is best illustrated with reference to Figures 3 through 5 showing an exemplary apparatus 100.

The exemplary apparatus 100 has an extruder means 80 for forming an elastomeric strip or apex bead 10, a support surface 60, and a means 70 for rotating the extruder means or alternatively the support surface about the axis of rotation of the support rim 62.

As shown the support surface 60 has a radially inner support rim 62. The support rim 62 acts like a ledge to provide an end for the formed component 10. The rim 62 as will be discussed holds a bead core 6 in place so an apex 10 can be formed and attached directly to the bead core 6.

To make different bead diameter tires using the same support surface 60, one simply can add concentric support rings onto the support rim 62 thereby increasing the diameter.

The support surface 60 can be flat, conical shaped or could be profiled having a curved surface. It must be appreciated this support surface 60 is forming one of the radially extending surfaces of the formed strip. The surface 60 can be an axially inner or an axially outer surface or both depending on the profile required to form the strip. The fact that the material is formed and applied in the orientation very close to the toroidially shaped green or uncured tire means the residual stresses particularly at the radially outer ends of the formed parts are virtually non-existent. This greatly approves the overall quality and uniformity of the formed components.

The extruder means 80 may be an extruder only or an extruder in combination with a gear pump or injector. As shown the extruder means applies the elastomeric material, typically rubber directly onto the support surface 60. The extruder means 80 can be mounted for vertical discharge or horizontal discharges dependent on the orientation of the support surface 60 as shown in Figure 7. The tip or discharge end 81 of the extruder preferably has a rough initial profile forming die 82 that shapes the part generally close to the shape of the finished product. Accordingly, the extruded initial profile die 82 can be a thin rectangular strip forming shape.

In practice the extruder discharges at an initial starting point and the strip is applied annularly by either rotating the extruder means 80 or the support means 60 about an axis of rotation.

A final shaping die 84 follows directly behind the extruder tip and as the rubber material is discharged onto the support surface 60 the final shaping die 84 compresses the material into a cross-sectional profile of the desired shape.

In practice both discharge end 81 of the extruder 80 and the final shaping die 84 are oriented at an angle of less than 90° relative to the support surface. The extruder discharge end 81 can be at any angle off normal such that the angle as shown applies the material more uniformly. The final shaping die 84 can be inclined at a much lower angle of attack having a leading or initial contact angle of less than 45° and at the trailing or finish end where the final shaping occurs preferably has a polishing or smearing angle of 0° to 20°.

A more sophisticated embodiment of the invention is shown in Figures 6-16. In this embodiment a robot 90 with a multiple axis movable arm 92 is connected to the extruder means 80 and the elastomeric extrudate passes through flexible hose 94 to the extruder forming assembly 80A which includes a discharge end 81, initial profile die 82 and the final shaping die 84.

As in the previously discussed apparatus 100 of Figures 3-5 the extrudate is fed out in strips 2 onto a support surface 60. The support surface 60 as shown is a toroidially expanded building drum 66. The drum 66 can be radially expandable as shown using an incompressible fluid medium or high pressure air, alternatively the toroidal shape may be formed of a rigid or solid core. The primary advantage of applying the strip 2 to a toroidially shaped surface is the finished part is accurately positioned in a green uncured state at the proper orientation to be molded without requiring any change in orientation from the condition in which the strip was initially formed.

As shown the apparatus is a tire building station 200. The exemplary robot 90 employs a single universal forming assembly 80A which can feed multiple compounds through a flexible hose assembly 94 with separate feed channels for delivering the proper compound to the discharge tip 81. As the strip material 2 is fed into the initial profile forming die 82, the support surface 60 rotates enabling the strip 2 to be formed annularly. The robotic arm 92 precisely moves as required to insure the final forming die 84 spreads the elastomeric material to the exact shape and thickness desired. This may be accomplished in as few as one rotation of the support surface for small narrow components or may require several rotations for thick or very wide components. The profile of each formed component can be varied in a fashion such that the cross-sectional thickness is very thin as in the tip of an apex or thick near the bead core. Also the entire profile can be thin as in a liner component. The robotic arm can articulate moving in numerous directions the numerous degrees of freedom enables the shaping die to form flat convex or concave curvatures as the material is spread.

As shown in Figure 7 the forming assembly 80A is physically attached to the robot by a bracket 93. A laser sensor 120 detects the distance from the support surface 60. This measured distance is fed back to a computer which is programmed to direct the robotic arm to move axially and radially along the flow path as the precise amount of strip material is placed onto the support surface or directly onto a previously formed component. As shown a pressure sensor 130 is embedded in the forming die 82, the pressure sensor 130 reads the applied pressure of the forming die to insure the extrudate is properly smeared. As can be easily appreciated the smearing of the strip requires a pressure that does not overly squeeze the material against the surface to which the part is being applied.

In Figures 10 through 16 the apparatus 200 is shown forming a tire assembly. While the many components are shown being applied using the apparatus 200 several cord reinforced components such as the belts, carcass plies and the chipper can be applied using previously calendered materials. Similarly the tread may be provided in a strip or an annular ring in a more conventional manner. What is important to note is some or all of these tire components can be formed using this technique of the present invention. The tire manufacturer simply can choose which components can be most efficiently produced using this technique.

In Figure 10, the innerliner 50 is being applied to the support surface 60. The inner liner 50 generally is made of halobutyl rubber and provides an air impervious barrier for tubeless tires.

In Figure 11, the ply stock coating 40 is shown being smeared onto the liner. Assuming cord reinforcements are used they will be applied onto the ply stock as a sheet or otherwise applied.

In Figure 12, the apex 10 is shown being applied directly over the bead cores 6 and against the ply stock.

In Figure 13, the belt reinforcing structure 25 is shown being applied in a conventional manner. The belt structure has two layers 27, 28 with oppositely oriented layers.

Figure 14 shows the sidewalls 20 and crown cushion layer being applied using the present invention. Each sidewall is applied over the bead apex and the ply coating 40.

Figure 15 shows the tread 22 being applied using the present invention. Often the tread is a complex structure having multiple layers. In such a case the tread 22 may be applied in multiple passes using the contouring profiling techniques previously discussed.

In Figure 16 the uncured green tire 5 is shown being enveloped by a mold right at the tire building station core. The mold 4 has a plurality of radially outer segments 4A and a pair of side plates 4B and 4C. The tire can then be cured under heat and pressure.

As shown in Figures 10 through 16 the entire tire building process can be efficiently completed taking strips of components and applying them on the support surfaces 60 shaping the components into a desired profile.

## Claims

1. A method of forming an annular tire component comprising a bead core (6) and an uncured bead apex (10), the method comprising the steps of:
placing an annular bead core (6) onto a surface (60);
extruding a first strip (2) of uncured elastomeric material annularly onto a surface adjacent the annular bead core (6);
shaping the first strip (2) of elastomeric material to a predetermined profile by compressing the first strip (2) of material between a shaping die (84), the annular bead core (6) and the surface adjacent the annular bead core (6) to form an annular bead apex (10) joined to the bead core (6); the profile having a radially extending surface extending between a radially inner end and a radically outer end substantially perpendicular to an axis of rotation of the first strip (2), **characterized in that** the first strip (2) is extruded by using an extruder (80) comprising a discharge end (81) and a shaping die (84), wherein the shaping die (84) compresses the first strip (2) of elastomeric material to the predetermined profile to join the first strip (2) to the bead core simultaneously as the extruded first strip (2) is placed annularly onto the surface adjacent the annular bead core (6).

2. The method of claim 1 further comprising the step of overlapping a first end of the first strip (2) with a terminal end of the first strip (2) by passing the first end and the terminal end between the shaping die (84) and the terminal end.

3. The method of claim 1 or 2 further comprising the step of rotating the first strip (2) about an axis of rotation as the first strip (2) is applied onto a surface adjacent the annular bead core (6).

4. The method of at least one of the preceding claims further comprising the step of rotating the surface (60) about an axis of rotation as the first strip (2) is applied to form the strip (2) annularly and substantially perpendicular to the axis.

5. The method of at least one of the preceding claims further comprising the steps of:
extruding a second strip of uncured elastomeric material annularly overlapping at least a portion of the first strip (2) and the surface (60);
shaping the second strip to a predetermined cross-sectional profile by compressing the second strip between a shaping die (84) and the overlapped first strip (2) and the surface (60).

6. The method of at least one of the preceding claims wherein the step of extruding the first strip (2) annularly onto the surface includes spirally applying multiple passes of the first strip (2) onto said surface.

7. The method of claim 7 wherein the step of shaping the spirally wound first strip (2) includes the step of moving the shaping die (84) radially outwardly as the first strip (2) is applied.

8. The method of claim 1, wherein the predetermined profile has non-parallel opposing surfaces.

9. The method of claim 1, wherein the predetermined profile has non-linear parallel surfaces.

10. The method of claim 1 further comprising the step of applying additional strips of uncured elastomeric material by annularly overlapping at least a portion of the first strip (6) or another previously applied strip.

11. The method of claim 1 wherein the bead apex is formed with an elongated triangular cross-sectional shape.

12. An apparatus for forming an annular tire component comprising a bead core (6) and a bead apex (10), the apparatus comprising:
an extruder means (80) for forming an uncured elastomeric strip (2);
a support surface (60) having a radially inner support rim (62) adapted to fit inside a bead core diameter ;
a means for rotating the extruder means (80) about the axis of the support rim (62) or alternatively a means for rotating the support surface (60) about the axis of the support rim (62);
wherein said means for rotating is configured to create a relative motion between the extruder means (80) and the support surface (60) thus enabling the strip (2) to be formed annularly; and
a shaping die (84) forming a cavity in combination with the support surface (60) through which the strip (2) is compressible, the shaping die being oriented at an angle of attack of 30° or less relative to the support surface (60), **characterized in that** the extruder means (80) comprises a discharge end (81) and the shaping die (84), said shaping die (84) being a final shaping die imparting the strip (2) in combination with the support surface (60) and a bead core a desired shape of a finished uncured bead apex and being located directly behind the discharge end (81).

13. The apparatus of claim 12 wherein the discharge end (81) has a rough initial profile forming die (82).

14. The apparatus of claim 13 wherein the initial profile forming die (82) is a thin rectangular strip forming shape.

15. The apparatus of claim 12 wherein the final shaping die (84) has a trailing or finish end where the final shaping occurs, the trailing or finish end having a polishing or smearing angle of 0° to 20°.

16. The apparatus of claim 12 wherein the support surface (60) is a toroidally expanded tire building drum (66).

17. The apparatus of claim 12 wherein the apparatus is a tire building station (200) comprising a robot (90) employing a universal forming assembly (80A) which can feed multiple compounds through a flexible hose assembly (94) with separate feed channels for delivering the proper compound to the discharge end (81).

18. The apparatus of claim 17 wherein the robot (90) has a multiple axis movable arm (92) being connected to the extruder means (80).

## Patentansprüche

1. Verfahren zur Herstellung eines ringförmigen Reifenbauteils, das einen Wulstkern (6) und ein unvulkanisiertes Wulstkernprofil (10) umfasst, wobei das Verfahren die Schritte umfasst des:
Auflegens eines ringförmigen Wulstkerns (6) auf eine Fläche (60);
ringförmig auf eine Fläche Extrudierens eines ersten Streifens (2) aus unvulkanisiertem Elastomermaterial benachbart zu dem ringförmigen Wulstkern (6);
Formens des ersten Streifens (2) aus Elastomermaterial zu einem vorbestimmten Profil durch Komprimieren des ersten Streifens (2) von Material zwischen einem Formgebungswerkzeug (84), dem ringförmigen Wulstkern (6) und der Fläche benachbart zu dem ringförmigen Wulstkern (6), um ein mit dem Wulstkern (6) verbundenes ringförmiges Wulstkernprofil (10) zu bilden, wobei das Profil eine radial verlaufende Fläche aufweist, die sich zwischen einem radial inneren Ende und einem radial äußeren Ende im Wesentlichen senkrecht zu einer Drehachse des ersten Streifens (2) erstreckt, **dadurch gekennzeichnet, dass** der erste Streifen (2) durch Verwendung eines Extruders (80) extrudiert wird, welcher ein Abgabeende (81) und ein Formgebungswerkzeug (84) umfasst, wobei das Formgebungswerkzeug (84) den ersten Streifen (2) aus Elastomermaterial auf das vorbestimmte Profil komprimiert, um den ersten Streifen (2) mit dem Wulstkern zu verbinden, während gleichzeitig der extrudierte erste Streifen (2) ringförmig auf die Fläche benachbart zu dem ringförmigen Wulstkern (6) aufgelegt wird.

2. Verfahren von Anspruch 1, weiter den Schritt des Überlappens eines ersten Endes des ersten Streifens (2) mit einem Abschlussende des ersten Streifens (2) umfassend, indem das erste Ende und das Abschlussende zwischen dem Formgebungswerkzeug (84) und dem Abschlussende hindurchgeführt werden.

3. Verfahren von Anspruch 1 oder 2, weiter den Schritt des Drehens des ersten Streifens (2) um eine Drehachse umfassend, wenn der erste Streifen (2) auf einer Fläche benachbart zu dem ringförmigen Wulstkern (6) angebracht wird.

4. Verfahren von mindestens einem der vorhergehenden Ansprüche, weiter den Schritt des Drehens der Fläche (60) um eine Drehachse umfassend, wenn der erste Streifen (2) angebracht wird, um den Streifen (2) ringförmig und im Wesentlichen senkrecht zu der Achse zu formen.

5. Verfahren von mindestens einem der vorhergehenden Ansprüche, weiter die Schritte umfassend des:
Extrudierens eines zweiten Streifens von unvulkanisiertem Elastomermaterial, der mindestens einen Teil des ersten Streifens (2) und der Fläche (60) ringförmig überlappt;
Formens des zweiten Streifens zu einem vorbestimmten Querschnittsprofil durch Komprimieren des zweiten Streifens zwischen einem Formgebungswerkzeug (84) und dem überlappten ersten Streifen (2) und der Fläche (60).

6. Verfahren von mindestens einem der vorhergehenden Ansprüche, wobei der Schritt des ringförmig auf die Fläche Extrudierens des ersten Streifens (2) das spiralförmige Aufbringen mehrerer Umläufe des ersten Streifens (2) auf die Fläche umfasst.

7. Verfahren von Anspruch 7, wobei der Schritt des Formens des spiralförmig gewundenen ersten Streifens (2) den Schritt des radial auswärts Bewegens des Formgebungswerkzeugs (84) beim Anbringen des ersten Streifens (2) umfasst.

8. Verfahren von Anspruch 1, wobei das vorbestimmte Profil nicht-parallele entgegengesetzte Flächen aufweist.

9. Verfahren von Anspruch 1, wobei das vorbestimmte Profil nichtlineare parallele Flächen aufweist.

10. Verfahren von Anspruch 1, weiter den Schritt des Anbringens zusätzlicher Streifen von unvulkanisiertem Elastomermaterial durch ringförmiges Überlappen mindestens eines Teils des ersten Streifens (6) oder eines anderen zuvor angebrachten Streifens umfassend.

11. Verfahren von Anspruch 1, wobei das Wulstkernprofil mit einer langgestreckten dreieckigen Querschnittsform ausgebildet ist.

12. Vorrichtung zur Herstellung eines ringförmigen Reifenbauteils, das einen Wulstkern (6) und ein Wulstkernprofil (10) umfasst, wobei die Vorrichtung umfasst:
ein Extrudiermittel (80) zum Formen eines unvulkanisierten Elastomerstreifens (2);
eine Auflagefläche (60) mit einer radial inneren Stützfelge (62), die dazu eingerichtet ist, in einen Wulstkerndurchmesser zu passen;
ein Mittel zum Drehen des Extrudiermittels (80) um die Achse der Stützfelge (62) oder alternativ ein Mittel zum Drehen der Auflagefläche (60) um die Achse der Stützfelge (62);
wobei das Mittel zum Drehen dazu konfiguriert ist, eine relative Bewegung zwischen dem Extrudiermittel (80) und der Auflagefläche (60) zu erzeugen, wodurch eine ringförmige Formgebung des Streifens (2) ermöglicht wird; und
ein Formgebungswerkzeug (84), das in Kombination mit der Auflagefläche (60) einen Hohlraum bildet, durch den der Streifen (2) komprimierbar ist, wobei das Formgebungswerkzeug in einem Angriffswinkel von 30° oder weniger in Bezug zu der Auflagefläche (60) ausgerichtet ist, **dadurch gekennzeichnet, dass** das Extrudiermittel (80) ein Abgabeende (81) und das Formgebungswerkzeug (84) umfasst, wobei das Formgebungswerkzeug (84) ein Endformgebungswerkzeug ist, das dem Streifen (2) in Kombination mit der Auflagefläche (60) und einem Wulstkern eine gewünschte Form eines fertigen unvulkanisierten Wulstkernprofils verleiht und sich direkt hinter dem Abgabeende (81) befindet.

13. Vorrichtung von Anspruch 12, wobei das Abgabeende (81) ein Formgebungswerkzeug (82) zum Formen eines groben Ausgangsprofils aufweist.

14. Vorrichtung von Anspruch 13, wobei das Formgebungswerkzeug (82) zum Formen des Ausgangsprofils eine einen dünnen rechteckigen Streifen bildende Form hat.

15. Vorrichtung von Anspruch 12, wobei das Endformgebungswerkzeug (84) ein nachlaufendes oder Abschlussende aufweist, wo das endgültige Formen stattfindet, wobei das nachlaufende oder Abschlussende einen Polier- oder Ausstreichwinkel von 0° bis 20° aufweist.

16. Vorrichtung von Anspruch 12, wobei die Auflagefläche (60) eine kreisringförmig expandierte Reifenbautrommel (66) ist.

17. Vorrichtung von Anspruch 12, wobei die Vorrichtung eine Reifenbaustation (200) ist, die einen Roboter (90) umfasst, der eine Universalformbaugruppe (80A) einsetzt, die mehrere Mischungen durch eine Schlauchbaugruppe (94) mit getrennten Zufuhrkanälen zur Abgabe der richtigen Mischung an dem Abgabeende (81) zuführen kann.

18. Vorrichtung von Anspruch 17, wobei der Roboter (90) einen in mehreren Achsen bewegbaren Arm (92) aufweist, der mit dem Extrudiermittel (80) verbunden ist.

## Revendications

1. Procédé de formation d'un composant annulaire de bandage pneumatique comprenant une tringle de talon (6) et un bourrage sur tringle non vulcanisé (10), le procédé comprenant les étapes consistant à :
placer une tringle de talon annulaire (6) sur une surface (60) ;
extruder une première bande (2) d'une matière élastomère non vulcanisée en une configuration annulaire sur une surface adjacente à la tringle de talon annulaire (6) ;
façonner la première bande (2) de matière élastomère pour lui conférer un profil prédéterminé en comprimant la première bande (2) de matière entre une matrice de façonnement (84), la tringle de talon annulaire (6) et la surface adjacente à la tringle de talon annulaire (6) pour obtenir un bourrage sur tringle annulaire (10) joint à la tringle de talon (6), le profil possédant une surface s'étendant en direction radiale entre une extrémité interne en direction radiale et une extrémité externe en direction radiale, essentiellement perpendiculairement à l'axe de rotation de la première bande (2) ;
**caractérisé en ce que** la première bande (2) est extrudée en utilisant une extrudeuse (80) comprenant une extrémité de sortie (81) et une matrice de façonnement (84), la matrice de façonnement (84) comprimant la première bande (2) de matière élastomère pour obtenir le profil prédéterminé afin de joindre la première bande (2) à la tringle de talon de manière simultanée au placement de la première bande extrudée (2) en une configuration annulaire sur la surface adjacente à la tringle de talon annulaire (6).

2. Procédé selon la revendication 1, comprenant en outre l'étape consistant à recouvrir une première extrémité de la première bande (2) avec une extrémité terminale de la première bande (2) en faisant passer la première extrémité et l'extrémité terminale entre la matrice de façonnement (84) et l'extrémité terminale.

3. Procédé selon la revendication 1 ou 2, comprenant en outre l'étape consistant à faire tourner la première bande (2) autour d'un axe de rotation lorsque la première bande (2) est appliquée sur une surface adjacente à la tringle de talon annulaire (6).

4. Procédé selon au moins une des revendications précédentes, comprenant en outre l'étape consistant à faire tourner la surface (60) autour d'un axe de rotation lorsque la première bande (2) est appliquée pour former la bande (2) en une configuration annulaire et essentiellement perpendiculairement à l'axe.

5. Procédé selon au moins une des revendications précédentes, comprenant en outre les étapes consistant à :
extruder une deuxième bande de matière élastomère non vulcanisée en une configuration annulaire, qui chevauche au moins une portion de la première bande (2) et de la surface (60) ;
façonner la deuxième bande pour lui conférer un profil prédéterminé en section transversale en comprimant la deuxième bande entre une matrice de façonnement (84) et la première bande recouverte (2) ainsi que la surface (60).

6. Procédé selon au moins une des revendications précédentes, dans lequel l'étape consistant à extruder la première bande (2) en une configuration annulaire sur la surface englobe l'application en spirale de multiples passages de la première bande (2) sur ladite surface.

7. Procédé selon la revendication 6, dans lequel l'étape consistant à façonner la première bande (2) enroulée en spirale englobe l'étape consistant à déplacer la matrice de façonnement (84) en direction radiale vers l'extérieur lors de l'application de la première bande (2).

8. Procédé selon la revendication 1, dans lequel le profil prédéterminé possède des surfaces opposées non parallèles.

9. Procédé selon la revendication 1, dans lequel le profil prédéterminé possède des surfaces parallèles non linéaires.

10. Procédé selon la revendication 11, comprenant en outre l'étape consistant à appliquer des bandes supplémentaires de matière élastomère non vulcanisée en recouvrant, en une configuration annulaire, au moins une portion de la première bande (2) ou d'une autre bande appliquée précédemment.

11. Procédé selon la revendication 1, dans lequel on confère, à un bourrage sur tringle, une configuration en forme de triangle allongé en section transversale.

12. Appareil pour former un composant annulaire de bandage pneumatique comprenant une tringle de talon (6) et un bourrage sur tringle (10), l'appareil comprenant :
un moyen d'extrusion (80) pour former une bande élastomère non vulcanisée (2) ;
une surface de support (60) possédant un rebord de support interne (62) en direction radiale conçu pour venir s'insérer à l'intérieur du diamètre d'une tringle de talon ;
un moyen pour faire tourner le moyen d'extrusion (80) autour de l'axe du rebord de support (62) ou en variante un moyen pour faire tourner la surface de support (60) autour de l'axe du rebord de support (62) ;
dans lequel ledit moyen d'une mise en rotation est configuré pour imprimer un mouvement relatif entre le moyen d'extrusion (80) et la surface de support (60) pour pouvoir ainsi conférer une forme annulaire à la bande (2) ; et
une matrice de façonnement (84) formant une cavité en combinaison avec la surface de support (60) à travers laquelle la bande (2) peut être comprimée, la matrice de façonnement étant orientée en formant un angle d'attaque de 30° ou moins par rapport à la surface de support (60), **caractérisé en ce que** le moyen d'extrusion (80) comprend une extrémité de sortie (81) et la matrice de façonnement (84), ladite matrice de façonnement (84) représentant une matrice de façonnement final conférant à la bande (2) en combinaison avec la surface de support (60) et une tringle de talon, une configuration désirée d'un bourrage sur tringle non vulcanisé prêt à l'emploi, et étant située directement derrière l'extrémité de sortie (81).

13. Appareil selon la revendication 12, dans lequel l'extrémité de sortie (81) possède une matrice de façonnement de profil initial grossier (82).

14. Appareil selon la revendication 13, dans lequel la matrice de façonnement de profil initial grossier (82) confère un façonnement d'une mince bande rectangulaire.

15. Appareil selon la revendication 12, dans lequel la matrice de façonnement final (84) possède une extrémité arrière ou de finition à l'endroit où a lieu le façonnement final, l'extrémité arrière ou de finition possédant un angle de polissage ou d'essuyage de 0° à 20°.

16. Appareil selon la revendication 12, dans lequel la surface de support (60) est un tambour de confection de bandage pneumatique (66) apte à s'élargir pour prendre une configuration toroïdale.

17. Appareil selon la revendication 12, dans lequel l'appareil est un poste de confection de bandage pneumatique (200) comprenant un robot (90) utilisant un assemblage de formation universel (80A) qui est en mesure d'acheminer plusieurs composés à travers un assemblage (94) en forme de tuyau flexible avec des canaux d'acheminement séparés pour distribuer le composé adéquat à l'extrémité de sortie (80).

18. Appareil selon la revendication 17, dans lequel le robot (90) possède un bras mobile (92) à axes multiples relié à un moyen d'extrusion (80).
